# EUROPEAN PATENT APPLICATION

(11) **EP 1 635 529 A1**
(43) Date of publication of application: **15.03.2006**
(21) Application number: 04445091.4
(22) Date of filing: 09.09.2004
(51) Int. Cl.: H04L 29/06, H04L 9/32, G06F 1/00

(54) **Method and computer product for proving time and content of data records in a monitored system**

(71) Applicant: Akenine, Daniel, 141 45 Huddinge (SE)
(72) Inventor: Akenine, Daniel, 141 45 Huddinge (SE)
(74) Representative: Karlsson, Leif Karl Gunnar

(57) **Abstract**

Method for monitoring and saving data records in a monitored system (100) with the purpose of preventing the possibility to tamper with said data records at a later time. The inventive method comprises the steps of saving data content together with a time-limited active key and encrypting the data content and active key using an encryption algorithm not possible for the encryptor to decrypt, the encrypted data content and active key forming the data record.

## Description

### Field of Invention

This present invention relates to a system and method for verifying the content of digital data and more particularly to a system and method that at a later time may provide proof of the content of some data passing through a system and at what moment in time this happened.

The present invention also relates to computer program products comprising computer program code which, when executed by one or several computers, will enable these computers to perform the inventive method. The invention also relates to a computer readable medium carrying such inventive computer program code.

### Description of background art

Event though the present invention may be used to verify all types of digital data the most common use of data verification is to verify data content in the form of electronic messages, like emails. This is because when sending an electronic message generally there are two human parties involved and they may, for a number of reasons, not always agree on the transmitted content at a later time.

The problem with email messages, as with all electronic documents, is that there exists no physical proof of the message content as there is when using a normal paper letter. A standard email message may easily be manipulated at some point in time and it is not possible to prove which email is the original one and which is the manipulated one. This fact makes communication by email not suitable for communication in certain situations.

An example may be a supplier of mobile phones receiving by email an order for 100 phones of model A from a customer. The supplier chooses to accept the order and sends the phones to the customer. When the phones arrive to the customer he refuses to accept the order and claims he ordered 100 phones of model B. The supplier will have a hard time using the email as evidence of the order.

How can a third party get a reliable picture of what has actually been sent to/from the involved parties?

It is evident that there exists a need for a way to later providing proof regarding the content and time of generated or transmitted digital data.

To meet this need some different methods has been proposed. The most common way of proving the content and owner of some digital data is by using public key encryption which is described in patent publication US 4,405,829 "Cryptographic communications system and method" - also known as the RSA algorithm. The publication describes an encryption technique based on an asymmetric scheme that uses a pair of keys for encryption: a public key, which encrypts data, and a corresponding private, or secret key for decryption. Or the other way around, a private key, which encrypts data, and a corresponding public key for decryption. For encryption a user publishes his public key to the world while keeping his private key secret. Anyone with a copy of his public key can then encrypt information that only he can read. It is computationally infeasible to deduce the private key from the public key. Anyone who has a public key can encrypt information but cannot decrypt it. Only the person who has the corresponding private key can decrypt the information. By additionally adding a digital signature, by running the information through a hash function to create a message digest and additionally encrypting the digest with the private key, the recipient may at a later time prove the content of the data and id of the owner.

However the method does only partially solve the electronic message problem and the disadvantages are manifold:
1. The senders/receivers must have private keys installed on the computer or use some kind of hardware containing the private key. Furthermore the sender must deliberately sign his outgoing message. If the sender knows that he may question the message content at some later time he will most likely not sign his message.
2. The method does not provide a way to prove the time the message was transmitted - the message may have been created at any time.
3. If the private key is compromised (for example by hackers etc...) anyone may take the identity of the sender.

As the method is somewhat complex to setup for the ordinary user it is mostly used to encrypt data with sensitive information for transportation through an insecure network

Another way of proving the content of messages sent and received is to use a trusted third party as a "middle man". A user sends all outgoing messages to the "middle man" and all incoming messages to the user first passes through the "middle man". The "middle man" saves all messages or a digital digest of the messages and stores them in some kind of data storage. As the "middle man" saves all messages he may serve as a verifier of the content and delivery of the messages at some later time. This technique may of course be used with all types of data.

A more sophisticated method of the "middle-man" approach is described in patent publication WO 0211025, "System and method for verifying delivery and integrity of electronic message", where a user that wants to send a message to a receiver first sends the message to a system operated by a third party. The third party creates a digital signature of the message and sends it back to the sender as a receipt. The sender may at a later time send the message and the receipt back to the third party for verification.

The "middle man" approach however has some major drawbacks. For instance, all data needs to be sent to the "middle man" for storage, signing or delivery. For many companies it is simply not an option to send important company data to another company. In the case of verifying emails: How does the sending company know that the emails are delivered and stored in a safe and secured manner? How to be sure that no personnel at the third party reads the emails for there own purposes. How to be sure that the emails are not changed or manipulated in the process? Simply put - most companies dealing with business information wants to keep control over their data and data delivering processes. This together with the fact that the company needs to be connected to the "middle-man" at all times is one of the reasons to why the "middle-man" approach is not widely spread. Other drawbacks are that if the data content is stored by the "middle-man" then the content may be unsafe, if only the signatures of the data are stored then the data content will be impossible to recreate.

All in all it is evident that there exists a need for a system and method that at a later time may provide proof of the content and time of data that were created, stored, sent or received by an untrusted system without the need to send data content or signatures to some "middle-man" for storage or signing.

### Summary of the invention

The problem facing an organization that wants to prove to someone else the time and content of some digital data created or passing through their system is that they are not trusted. The reason is that they are free to manipulate the data before presentation.

The present invention describes a method for monitoring and saving data records in a monitored system with the purpose of preventing the possibility to tamper with said data records at a later time. With the purpose of solving one or all of the above identified problems the inventive method comprises the steps of saving data content together with a time-limited active key and encrypting the data content and active key using an encryption algorithm not possible for the encryptor to decrypt, the encrypted data content and active key forming the data record.

The resulting data records may be consider as time-locked trusted data even though they are recorded and stored by an untrusted system.

To further prevent adding, deleting or altering of individual data records the present invention teaches the steps of generating a lock value representing all former data records, and saving the lock value together with the data content and time-limited active key before performing the encryption, the encrypted data content, active key and lock value thus forming the data record.

The resulting new data record will be an integrated and undivided part of the whole data file.

The lock values are created by hashing one or all former data record(s) or data content. If the data record is a first data record in a set of data records, then the time-limited active key is used as a lock value representing a virtual former data record.

Timestamps generated by an untrusted system are easy to manipulate. To solve this problem the present invention uses time limited active keys to time lock the data records. The time limited active keys may be issued by a trusted synchronization server. The time limited active key is a representation of a time interval, during which time interval the time limited active key is valid, the time interval being coded so that only the trusted synchronization server can decode and indicate the time interval.

The trusted synchronization server creates a unique pattern of active keys for each monitored system and synchronizes continuously the monitored systems so that they always have a valid active key. By saving the active keys in the encrypted data records the data records will become time locked in a trusted way.

To make it impossible for anyone to calculate the pattern of active key for a specific monitored system, the pattern of active keys consists of a combination of random keys, and the time intervals represented by respective key may all be the same or differ between keys.

If at a later time there is a need to verify a data record then the data file, or parts of the data file, is sent to a verification provider. A verification provider is someone that is considered by all parties to be an independent and trusted party. The verification provider has possession of the private key to decrypt the data records and access to the pattern of active keys defined for the specific monitored system that has created the data file.

Upon verification the verification provider decrypts the data records, and if lock values are used, recalculates the lock values and compares them with the lock values stored in the data file. It they do not match then someone has added, deleted or altered some data in the file after it has been recorded. If they match then the verification provider compares all active keys in the pattern database for the specific monitored system with the active keys stored in the data records. If the active keys for the same time do not match then the data record(s) has been created at some other time than claimed.

The present invention may further use the services exposed by a trusted computing platform (TCP). By using the trusted time services of a TCP the active keys may be generated by the internal trusted time service thus eliminating the need for a synchronization server supplying active keys. The active key value provided by the TCP may be an UTC timestamp or a representation of a time interval. Upon data verification the active key is considered to be trusted and may be used as a trusted indicator of when the data was recorded. The internal trusted time services may be synchronized by any trusted time source.

### Brief description of the drawings

A method, a system, various computer program products and a single computing unit according to the present invention will now be described in detail with reference to the accompanying drawings, in which:
- Figure 1: is a diagram describing system modules
- Figure 2A: is a flow diagram describing the registration of a new synchronization slave module
- Figure 2B: is a flow diagram describing the synchronization process
- Figure 3: is a flow diagram describing the encryption module
- Figure 4: is a flow diagram for verification of data
- Figure 5: is an example of a data record,
- Figure 6: is a flow diagram describing the encryption process when using an extra symmetric key,
- Figures 7and 7b: schematically and very simplified shows inventive computer program products, and
- Figure 8: schematically shows an inventive computer readable medium.

### Description of embodiments as presently preferred

This description is not to be taken in a limiting sense, but is merely for the purpose of illustrating the general principals of the invention. The section titles and overall organization of the present detailed description are for the purpose of convenience only and are not intended to limit the present invention.

In this description a Verification Provider (VP) is defined as an organization that is considered by all parties to be an independent and trusted party.

### RUNNING ON AN UNTRUSTED SYSTEM EMBODIMENT

The challenge facing an organization that wants to prove to someone else the time and content of some digital data created or passing through their system is that they are not trusted. The organization has physical access to the data and has the power to alter, add or delete data as they find appropriate before presenting the data. The invention must therefore supply a method that collects and saves data on an untrusted system in a way that makes it impossible for the owner of the data to later change the data that was registered on the untrusted system. Attempts by the owner to alter, delete, add or reconstruct the data at a later time must be possible to detect by a verification provider.

In this embodiment the present invention solves this problem in three steps:
1. linking all data records together by, when adding a new data record, generating a lock value representing all former data records and adding the lock value to the new record making it impossible to alter, delete or add data records if not reconstructing the whole database using fake data,
2. saving a time-limited active key issued by the verification provider, representing a time span, together with the data content thus making it impossible to reconstruct the database using fake data at a later time, and
3. encrypting the data content, lock value and active key in a way that makes is impossible for anyone, except the Verification Provider, to decrypt the data.

This embodiment shows an example of how the invention may be used to later verify time and content of computer network traffic in the form of email messages. It consists of at least one monitored system and one synchronization server. The monitored system collects, synchronizes, encrypts and stores all computer network traffic that passes through the computer. The synchronization server sends active keys to the monitored system.

### COLLECTING DATA

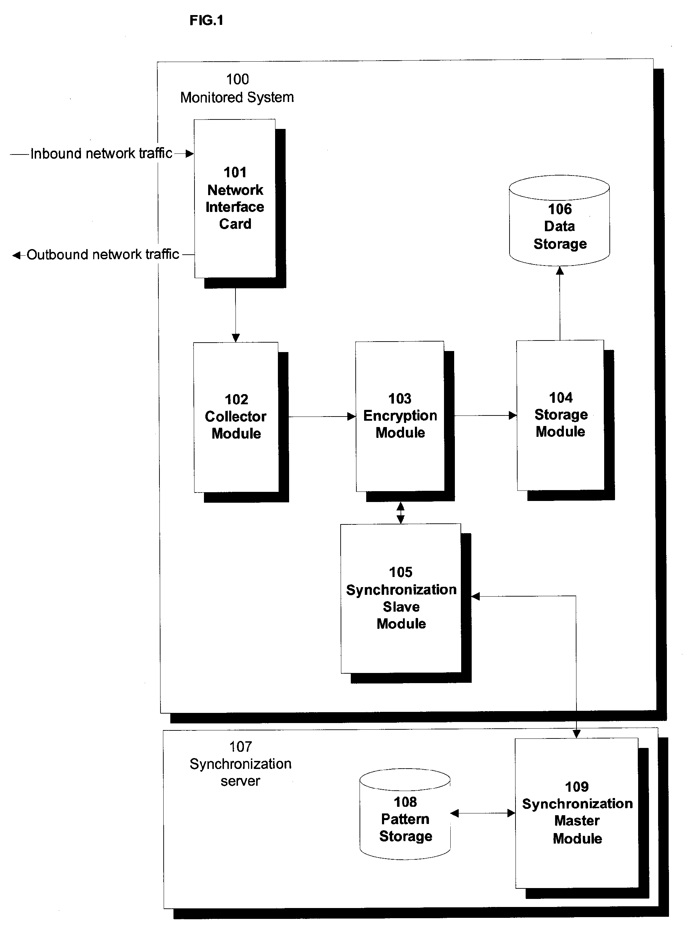

With reference to the system diagram of figure 1 it is shown that any system that is connected to a computer network needs some type of network interface 101 - this may be a wireless network card, a standard Ethernet network card or some other type of interface to the network. On the network, computer signals will be sent to or from the monitored system 100. Depending on the network architecture computer signals to other systems may also pass the network interface on the monitored system 100 and may be monitored as well.

On the monitored system 100 a collector module 102 is installed. The collector module is scanning and monitoring all traffic that passes through the network interface 101 - this technique is in some literatures referred to as "sniffing".

The collector module 102 may additionally perform some real-time analysis on the traffic, filtering out unwanted traffic based on traffic type, destination ports or some other parameter(s). In this embodiment the collector module 102 is collecting email traffic only. This may be done for example by collecting only network traffic that is using the Simple Mail Transport Protocol (SMTP). There may be one or many collector modules on the network sending data to one or many encryption modules.

### SYNCHRONIZATION

For reasons that will become clear when describing the encryption module 103 the monitored system needs to be periodically synchronized with a server operated by a verification provider - the synchronization server 107. The synchronization process is performed by a synchronization slave module 105 installed on the monitored system 100 which communicates in a safe and encrypted way with a synchronization master module 109. When installing the synchronization slave module a unique lD is supplied making it possible for the synchronization master module to identify the slave module and personalize the synchronization. The synchronization master module may be installed on a server under the control of the verification provider. The synchronization slave module and the synchronization master module connects to each other preferably over the Internet. The communication between the two modules should be kept secret so an encrypted secure connection needs to be established. This is preferably done using HTTP requests over Secure Socket Layer, also known as HTTPS. HTTPS is today the standard way of sending encrypted data over untrusted networks like the Internet. Other safe communication channels may of course also be used.

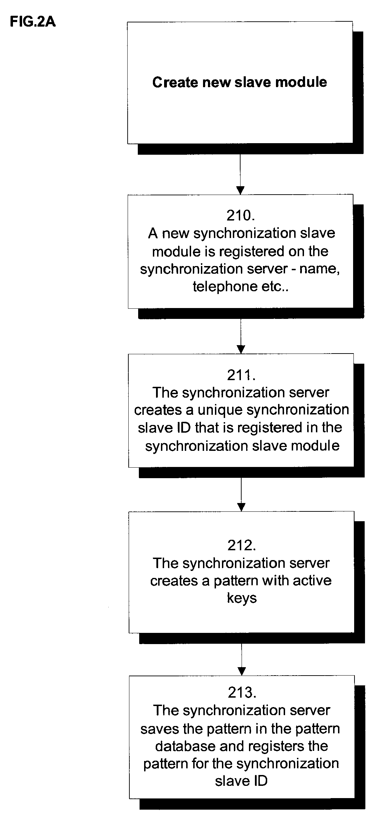

Referring now to the flow diagram of FIG.2A describing the process of registering a new synchronization slave module.
210. A new synchronization slave module is registered at the synchronization server 107. This is done by an administrator preferably by using an administrative application to add and store slave module information (i.e. organization name, contacts etc....)
211. The administrative software creates a unique id number that later will be used when installing the slave module. This is necessary for the master to identify the slave when synchronizing.
212. The administrative software creates a unique pattern of active keys for the new slave module. The pattern consists of a combination of random keys and the time intervals when the keys are valid. The time intervals may all be the same or differ between keys.

**Ex:**

| Active Key | Valid from | Valid to |
|---|---|---|
| AF619H1ASF8EH273HAJFHKDF | 2007-01-01 23:00:00 | 2007-01-01 23:15:00 |
| 7ADFHA93HRADJ83A4QHFLCN | 2007-01-01 23:15:00 | 2007-01-01 23:30:00 |
| 13OFJDEQJKDJVNSR418JSDU3 | 2007-01-01 23:30:00 | 2007-01-01 23:45:00 |

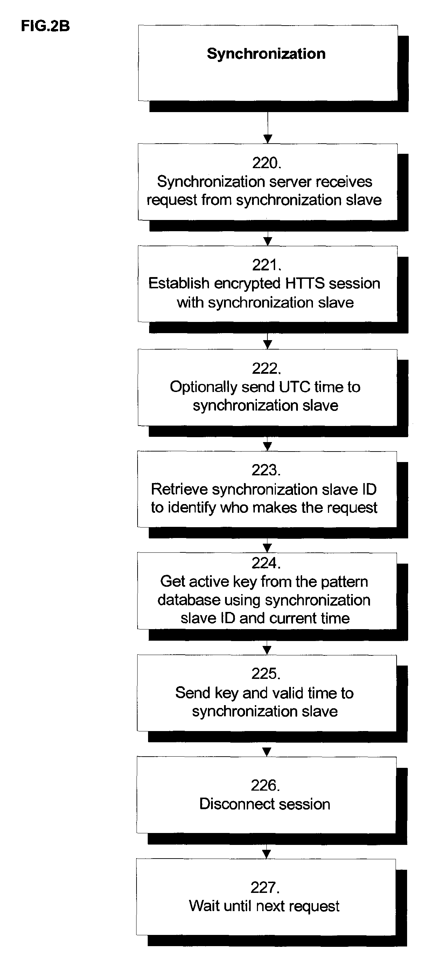

The pattern should be created so it contains a sufficient amount of keys for a long period of time.
213. The administrative software then saves the pattern in the pattern storage database 108 together with the synchronization slave module ID (SSM-ID) thus associating the pattern with the new synchronization slave module.
   Now referring to the flow diagram of FIG.2B describing the synchronization process.
220. The synchronization master module 109 receives a request from the synchronization slave module 105 to connect. This event is triggered when the current active key of the synchronization slave module is invalid or soon invalid and the monitored system needs a new active key. The request to connect may be initiated either by the synchronization slave module 105 or the synchronization master module 109
221. An HTTPS session is established making it possible to communicate in a safe way.
222. The synchronization master module optionally sends the current UTC to the synchronization slave module. UTC refers to a time scale called "Coordinated Universal Time" (abbreviated UTC), which is the basis for the worldwide system of civil time. This time scale is kept by time laboratories around the world and is determined using highly precise atomic clocks. Here we define the UTC time as a timestamp containing enough information to uniquely define the time independently of the time zone. If the UTC time is sent from the synchronization master module then it is used to synchronize the time kept by the synchronization slave module.
223. The synchronization master module requests and retrieves the synchronization slave module ID (SSM-ID) from the synchronization slave module.
224. Using the current time and SSM-ID the synchronization master module looks up the next active key from the pattern storage database 108. If no active key exists in the pattern storage database 108 then the synchronization server creates a new active key and saves it in the pattern storage database 108,
225. The synchronization master module sends the active key to the synchronization slave module together with information on how long the key will be active.
226. The session is disconnected.
227. The synchronization master module waits for the next request.

### ENCRYPTION

When the collector module 102 has collected enough information it sends the data over to the encryption module 103. The encryption module has the responsibility to create and encrypt a data record that:
1: Contains information about the email and attachments
2: Contains information that makes it possible to prove that it was created at a specific time
3. Prepare and sign it in a way that makes it impossible at a later time to alter, delete or remove the email without destroying the integrity of the data file.

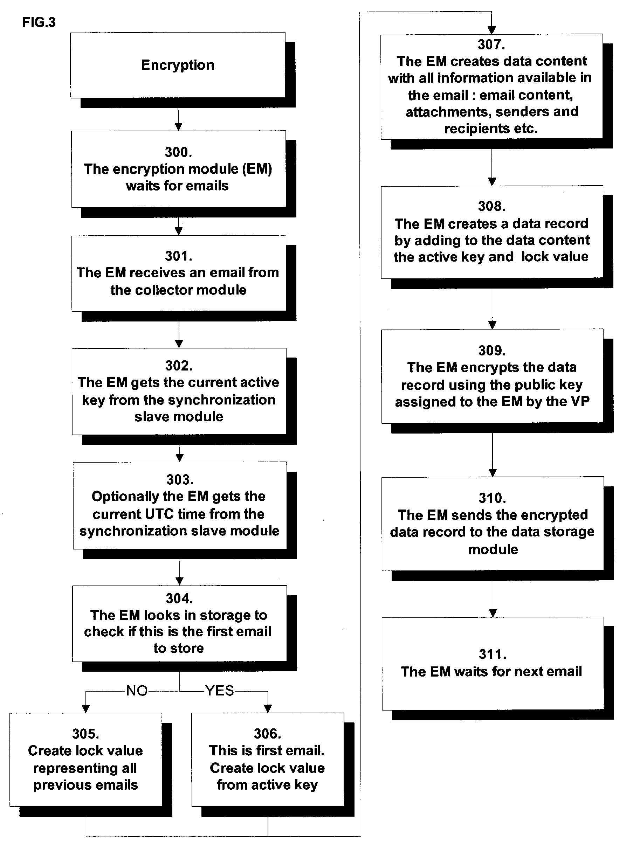

Referring now to FIG. 3 describing the encryption process.
300. The encryption module 103 is in idle mode ― waiting for data to encrypt.
301. The encryption module 103 receives data from a source - in this case an email collected by the collector module 102.
302. To be able to later verify that the email was received at a specific time the encryption module 130 asks the synchronization slave module 105 for the current active key which it will encrypt together with the data. It is the responsibility of the synchronization slave module 105 to keep the active keys valid by communicating with the synchronization master module 109.
303. The encryption module 103 optionally asks and retrieves the current UTC time from the synchronization slave module 105.
304-306. To be able to make the new data record an integrated and undivided part of the whole data file the encryption module 103 generates a lock value from either the previous email or all previous emails using either the contentof the former email(s) or the encrypted content. The generated lock value serves as a representation of all previous stored data. If this is the first data record in the file the encryption module may instead use the current active key to create a lock value. The lock value is created using a good hash function like MD2, MD5 or SHA. A good hash function is not possible to invert. Given a hash value h, it is computationally infeasible to find some input x that H(x) = h, also it is computationally infeasible to find some input y such that H(x) =H(y). The result is that it is not possible to use the hash value to retrieve the original data. Furthermore, it is not possible to create a message different from the original message that will result in the same hash value when run through the same hash algorithm. Hash algorithms are described in Bruce-Schneider, Applied Cryptography: Protocols, Algorithms, and Source Code in C, John Wiley & Sons, Inc. If data storage is of little importance then the lock value could also consist of the content of the former email instead of hashing it.
307. The encryption module 103 creates the data content that contains the data sent to the encryption module 103 and optionally adds additional information. For the email example this would contain all possible normal email properties like sender, recipients, attachments etc...
308. The encryption module 103 then adds the active key and lock value to the data content thus creating a data record. A timestamp declaring when this data record was created, the claimed creation time (CCT), may additionally be added in this step. The CCT may also be added later, for instance by the Storage Module 104 or by the database system. If a UTC time stamp where supplied in step 303 it may be used as the CCT otherwise the normal system time is used as the CCT. The CCT may be stored inside the encrypted data record or in clear text outside of it. Its purpose is to claim that the data record was created at a specific time
309. The encryption module 103 then encrypts the data record using the public key assigned by the verification provider. The key is typically specified when installing the encryption module. Any good public key encryption technique may be used. The previously mentioned RSA encryption technique would be a good choice. The performance of the encryption may be improved by combining symmetric encryption techniques with asymmetric encryption - however the functionality will be the same.
310. The encryption module 103 sends the encrypted data record to the data storage module.
311. The encryption module 103 waits for more data to process.

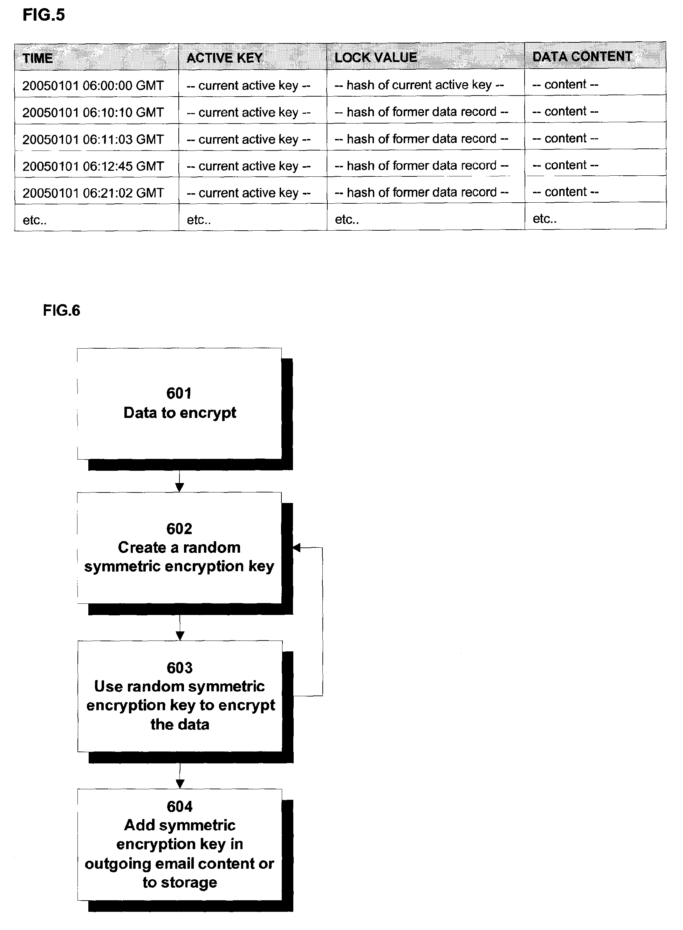

An example of a possible resulting unencrypted data record is shown in FIG.5

### VERIFICATION

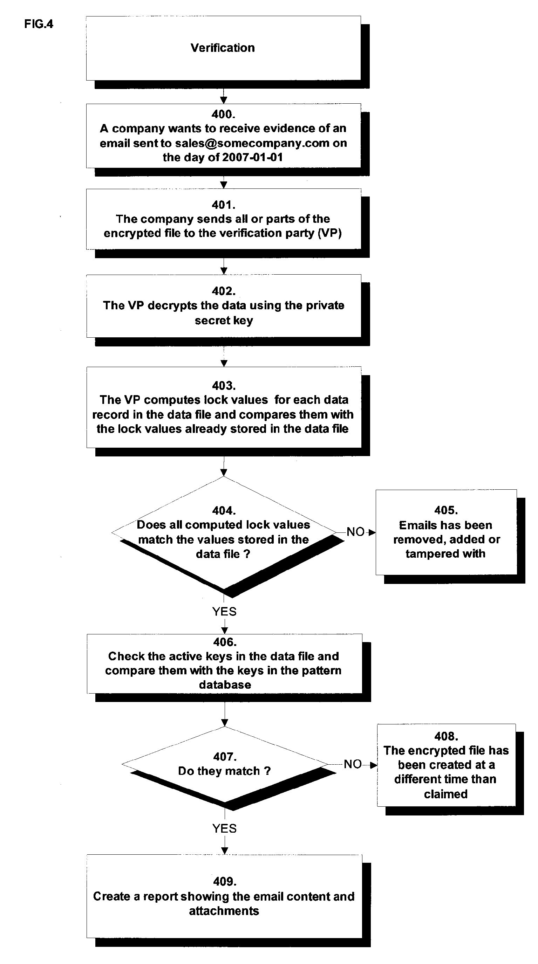

Referring now to FIG.4 describing the verification process.

400 At a later time there may be a need for the owner of the Monitored System (OMS) to verify a specific email that a sender claims he sent to the OMS on the day of 2007-01-01.
401. The owner of the Monitored System (OMS) now sends all or a part of the encrypted data file to the Verification Provider (VP). The monitored system may for storage reasons save the data in several smaller parts instead of one large file. In this case each part should have the current active key as the start and end data record to seal it.
402. The VP decrypts the file using the secret private key only known by the VP.
403. The VP now runs the data records in the file through the same algorithm that was used by the Encryption Module 103 to create the lock values.
404. Check that the new computed lock values are the same as the lock values stored in the email data file.
405. If the values does not match that means that some email(s) in the data file has been removed, added or tampered with and no positive verification can be done.
406. If the values match then it needs to be verified that the emails in the data file where created at the time they say they are. The VP retrieves all active codes that were encrypted together with the emails in the data file together with all active codes stored in the pattern database 108 for the customer.
407. Compare all active codes in the pattern database 108 for the customer with the active codes stored in the email data file.
408. If any active code for a specific claimed creation time in the data file does not match the active codes for the same time in the pattern database the encrypted data record has been created at a different time than claimed
409. If the codes match - a report is created listing the content and attachments of the email(s) that was sent to the system from the sender in question. The report may also contain other information like accurate UTC timestamps, DNS information, IP addresses, MAC address of the monitored system, information about the network environment when the email was sent/received etc.... The VP then delivers some form of testimony (sworn testimony, affidavit testimony etc...) that this is a correct report.

### ADDITIONAL EMBODIMENTS

In another embodiment the present invention is running on a Monitored System (MS) with a hardware and software configuration implementing a computing platform known as a Trusted Computing Platform (TCP).

TCP provides a computing platform for applications where the owner of the system can not tamper with the applications and where these applications can communicate securely with their authors and with each other. A TCP may further deliver trusted services to applications like trusted memory space, trusted time services etc. An example of a possible Trusted Computing Platform is described in patent publication US 6,330,670, "Digital Rights Management Operating System".

A standard computer needs special hardware installed to be able to implement the security mechanisms of a TCP. Trusted Computing industry standards are currently set by the Trusted Computing Group (TCG).

In this embodiment the invention may use the time services delivered by the Trusted Computing Platform to generate the active key without using a synchronization server 107. The internal trusted clock is delivered by the TCP architecture, guaranteed to be accurate and not possible to manipulate by the owner of the system - it may be synchronized internally or from some other trusted time source. The active key in this case will consist of a timestamp or a representation of a timestamp delivered by the trusted clock instead of being supplied by the synchronization server 107.

The system operates basically as in the first embodiment with the difference that no synchronization or synchronization setup is needed. The active key will be delivered to the encryption module 103 in step 302 by the TCP and upon data verification the active key is considered to be trusted by the verification provider. This means that Steps 406-408 in Fig.4 may be omitted when verifying the data. Instead the active key may be used to verify the claimed creation time by simply comparing the two. If they represent the same time then the claimed creation time is correct. The active key could also be used as the claimed creation time if the claimed creation time is stored inside the encrypted data record.

In another embodiment the invention does not use the technique, described in the first embodiment, to link all data records together using lock values. Lock values are necessary in most cases as data normally is stored in a database file system where it is easy to find and manipulate individual data records. In this embodiment the system instead saves the data records in a data file represented as a single BLOB (Binary Large Object). With a BLOB we mean, in this case, a data file where it is not possible, except for the Verification Provider who may decrypt the data file, to know where individual data records starts or ends. The effect is that it is not possible to delete, alter or add individual records because it is not possible to know the storage position for individual data records in the data file. To create a single BLOB the Storage Module 104 could, instead of using a database system, continuously stream the data records sequentially into a standard file without inserting any control characters in the file to indicate start or beginning of the data records.

The system operates basically as in the first or second embodiment with the difference that the data records are not linked together using lock values and that upon data verification the verification provider does not need to do the verifycation steps 403-405 to verify that no data records has been added, altered or deleted.

In another embodiment the collector module is feed from some other information provider than the Network Interface Card. In this embodiment the collector module for example scans the local system for new or changed Microsoft word documents. When a new word document is saved to the hard drive the collector module intercepts the document and sends it to the encryption module for processing and storage - the document never leaves the local computer. At a later time the user may use the normal verification process (Fig.4) to prove he wrote a specific document at a specific time.

In another embodiment the present invention uses, instead of two, a combination of three (or more) secrets to encrypt the data. This means that to be able to decrypt and verify the data three (or more) ingredients need to be in place. The Verification Provider (with the private asymmetric key), the recorded data file (encrypted with the public asymmetric key) and the symmetric encryption key(s) needed for decryption of the content in the recorded data file. The symmetric encryption key(s) may be included in an email or stored/distributed in some other way.

Referring now to Fig.6
601. A Symmetric Encryption Module (SEM) receives either an email to encrypt from the Collector Module 102 or an encrypted data record from the Encryption Module 103 depending on what content is desired to be protected using symmetric encryption. Not only these entry points are possible - the described symmetric encryption process may be "plugged-in" anywhere in the process to protect data.
602. The SEM creates a random symmetric encryption key.
603. The SEM uses the random symmetric encryption key to encrypt the data using some known strong symmetric encryption algorithm. Optionally the SEM may create a new random symmetric encryption key and encrypt the encrypted data to produce a new key. This procedure may be repeated again and again to produce as many keys as desired. All keys will be needed when decrypting the data. The SEM could also for performance reasons instead split the original symmetric encryption key in as many parts as desired to generate the same effect. In that case the size of the original symmetric encryption key will decide how many separate keys may be created.
604. The SEM then either adds the symmetric key(s) needed to decrypt the email to the outgoing email sent from the system or stores/sends the key(s) to somewhere for archive. The SEM then sends the data either to the Encryption Module 103 (if receiving the email from the Collector Module 102) or the Storage Module 104 (if receiving the email from the Encryption Module 103) or to some other suitable point for further processing.

To be able to verify the email the Verification Provider need to be supplied with all the symmetric encryption key(s) for each email.

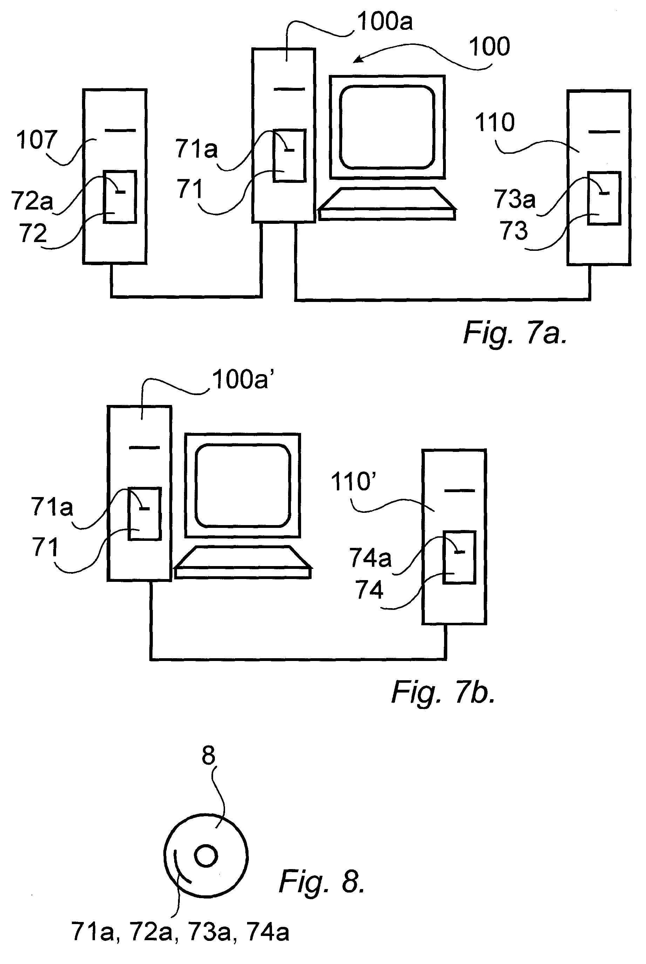

The present invention also relates to a number of computer program products, schematically shown in figures 7a and 7b.

A first computer program product 71 comprises first computer program code 71 a, which, when executed by a computer, enables the computer to act as a monitored server 100a belonging to an inventive monitored system 100.

A second computer program product 72 comprises second computer program code 72a, which, when executed by a computer, enables the computer to act as an inventive synchronization server 107.

A third computer program product 73 comprises third computer program code 73a, which, when executed by a computer, enables the computer to act as an inventive verification provider 110 adapted to co act with a monitored server 100a running on an untrusted computing platform, figure 7a.

A fourth computer program product 74 comprises fourth computer program code 74a, which, when executed by a computer, enables the computer to act as a verification provider 110' adapted to co act with a monitored server 100a' running on a trusted computing platform, figure 7b.

The present invention also relates to a computer readable medium 8, in figure 8 schematically illustrated as a compact disc, which is carrying inventive first, second, third or fourth computer program code 71 a, 72a, 73a, 74a.

Although the present invention has been described with reference to certain embodiments, those skilled in the art will recognize that various modifications may be provided. For example, although separate modules for collection, encryption, verification and synchronization are described, it is understood that the various processes may be integrated into common modules or subdivided into additional modules which perform equivalent functions. Also the modules may be distributed and located on several systems. Additionally, although computer network traffic in the form of email messages is generally used in the embodiments, it is understood that the invention may be used to monitor all types of computer network traffic or other types of data flow and that the term "email" may be substituted by the term "electronic content" in the described embodiments.

These and other variations upon and modifications to the described embodiments are provided for by the present invention which is limited only by the following claims.

## Claims

1. Method for monitoring and saving data records in a monitored system with the purpose of preventing the possibility to tamper with said data records at a later time, **characterised in**, saving data content together with a time-limited active key and encrypting said data content and active key using an encryption algorithm not possible for the encryptor to decrypt, said encrypted data content and active key forming said data record.

2. Method according to claim 1, **characterised in**, generating a lock value representing all former data records, and saving the lock value together with said data content and said time-limited active key before performing said encryption, said encrypted data content, active key and lock value forming said data record.

3. Method according to claim 2, **characterised in, that** said lock value is a hash of the data content of the former data record.

4. Method according to claim 2, **characterised in, that** said lock value is a hash of the former data record.

5. Method according to claim 2, **characterised in, that** said lock value is a hash of the data content of at least two of the former data records.

6. Method according to claim 2, **characterised in, that** said lock value is a hash of at least two of the former data records.

7. Method according to claim 2, **characterised in, that** said lock value is the data content of the former data record.

8. Method according to any one of claims 2 to 7, **characterised in, that**, if said data record is a first data record in a set of data records, then said time-limited active key is used as a lock value representing a virtual former data record.

9. Method according to claim 1 or 8, **characterised in, that** said time limited active key is provided by a trusted synchronization server.

10. Method according to claim 9, **characterised in, that** said time limited active key is a representation of a time interval, during which time interval said time limited active key is valid, said time interval being coded so that only said trusted synchronization server can decode and indicate said time interval.

11. Method according to claim 9 or 10, **characterised in, that** a UTC time stamp is included in said data record before encryption, representing the claimed creation time of said data record.

12. Method according to claim 11, **characterised in, that** said UTC time stamp is provided by said trusted synchronization server.

13. Method according to any one of claims 9 to 12, **characterised in, that** a synchronization slave module, belonging to said monitored system, handles said time-limited active keys, that the set-up of said synchronization slave in said monitored system comprises the steps of:
- registering said synchronization slave module at said trusted synchronization server,
- creating a unique ID number that later will be used when installing said synchronisation slave module,
- creating a unique pattern of active keys for said synchronization slave module, and
- saving the pattern of active keys in a pattern storage database belonging to said trusted synchronization server together with the synchronization slave module ID,
where said creation of said unique ID and unique pattern of active keys are performed by said trusted synchronization server.

14. Method according to claim 13, **characterised in, that** said pattern of active keys consists of a combination of random keys, and that the time intervals represented by respective key may all be the same or differ between keys.

15. Method according to claim 13 or 14, **characterised in, that** said pattern of keys are created so it contains a sufficient amount of keys for a long period of time, such as 10 years, from the creation day.

16. Method according to claim 13, 14 or 15, **characterised in, that** a synchronisation between said synchronization slave module and a synchronization master module belonging to said synchronization server comprises the steps of:
- said synchronization slave module sending or receiving a request to connect to said synchronization master module, said request being triggered when the current active key of said synchronization slave module is invalid or soon invalid and said monitored system needs a new active key,
- establishing a communication session between said synchronization slave module to said synchronization master module, making it possible to communicate in a safe way, such as a HTTPS session,
- said synchronization master module optionally sending a current UTC time stamp to said synchronization slave module,
- said synchronization master module retrieving the synchronization slave module ID from said synchronization slave module,
- said synchronization master module looking up the next active key from said pattern storage database using the current UTC time and said ID,
- said synchronization master module creating a new active key and saving it in said pattern storage database using the current UTC time and said ID if no active key was found in the previous step,
- said synchronization master module sending said active key to said synchronization slave module together with information on how long the key will be active, and
- disconnecting said session.

17. Method according to any preceding claim, **characterised in, that** a verification of a data record or records comprises the steps of:
a) said monitored system sending all or a part of the data records to a verification provider,
b) said verification provider decrypting said data records using a secret private key only known by said verification provider,
c) said verification provider retrieving all active keys from the data records,
d) said verification provider retrieving all active keys stored in the pattern database for said monitored system,
e) said verification provider comparing all active keys from the pattern database with the active keys stored in the data records,
f) said verification provider giving a negative verification if any active key for a specific claimed creation time in the data file does not match the active key for the same time from the pattern database, and
g) said verification provider giving a positive verification if the keys match.

18. Method according to claim 17, **characterised in, that**, if a lock value is used and included in said data record, then a verification of a data record or data records comprises the following steps after step b:
b1) said verification provider running the data records through the same algorithm that was used by the monitored system to generate said lock values,
b2) said verification provider checking that the new generated lock values are the same as the lock values stored in the data records,
b3) said verification provider giving a negative verification if the lock values does not match, and
b4) said verification provider continuing with step c) if the lock values match.

19. Method according to claim 17 or 18, **characterised in, that** the same server has the role of said synchronization master module and said verification provider.

20. Method according to any preceding claim, **characterised in, that** said monitored system is running on a trusted computing platform.

21. Method according to any one of claims 1 to 8, **characterised in, that** said monitored system is running on a trusted computing platform, and that said time limited active key is provided by said trusted computing platform.

22. Method according to claim 21, **characterised in, that** said time limited active key is a representation of a time interval, during which time interval said time limited active key is valid, that said active key is generated by a trusted internal clock belonging to said trusted computing platform.

23. Method according to claim 21, **characterised in, that** said time limited active key is a UTC time stamp representing the time of encryption, said active key being protected in the trusted part of said trusted computing platform.

24. Method according to claim 23, **characterised in, that** said UTC time stamp is provided by an internal trusted clock, belonging to said trusted computing platform.

25. Method according to claim 22 or 24, **characterised in, that** said internal trusted clock is synchronized with an external trusted time source.

26. Method according to any one of claims 21 to 25, **characterised in, that** a verification of a data record or records comprises the steps of:
a) said monitored system sending all or a part of the data records to a verification provider,
b) said verification provider decrypting said data records using a secret private key only known by said verification provider, and
c) said verification provider giving a positive verification if the active key stored in the data records matches the claimed creation time.

27. Method according to claim 26, **characterised in, that**, if a lock value is used and included in said data record, then a verification of a data record or data records comprises the following steps:
b1) said verification provider running the data records through the same algorithm that was used by the monitored system to generate said lock values,
b2) said verification provider checking that the new generated lock values are the same as the lock values stored in the data records,
b3) said verification provider giving a negative verification if the lock values does not match, and
b4) said verification provider continuing with step c) if the lock values match.

28. Method according to any preceding claim, **characterised in, that** e-mail messages sent and received by said monitored system constitutes data content in data records.

29. Method according to claim 28, **characterised in, that** all e-mail messages sent and received by said monitored system constitutes data content in data records.

30. Method according to claim 28, **characterised in**, predefined rules defining what e-mail messages that are to constitute data content in data records.

31. Method according to claim 28 or 30, **characterised in, that** a user of said monitored system actively selects e-mail messages that are to constitute data content in data records.

32. Method according to any one of claims 1 to 27, **characterised in, that** all network traffic to and from said monitored system constitutes data content in data records.

33. Method according to any preceding claim, **characterised in, that** electronic documents stored by said monitored system constitutes data content in data records.

34. Method according to claim 33, **characterised in**, predefined rules defining what electronic documents that are to constitute data content in data records.

35. Method according to claim 33 or 34, **characterised in, that** a user of said monitored system actively selects electronic documents that are to constitute data content in data records.

36. Method according to any preceding claim, **characterised in, that** a symmetric encryption module, belonging to said monitored system is performing the steps of:
- creating a random symmetric encryption key,
- encrypt said data content using said symmetric encryption key and a symmetric encryption algorithm,
- optionally repeating the steps above as many times as desired to create as many symmetric encryption keys as desired, and
- distributing the symmetric encryption keys to trusted parties for storage.

37. First computer program product, **characterised in, that** said first computer program product comprises first computer program code, which, when executed by a computer, enables said computer to act as a monitored server belonging to a monitored system according to any one of claims 1 to 36.

38. Second computer program product, **characterised in, that** said second computer program product comprises second computer program code, which, when executed by a computer, enables said computer to act as a synchronization server according to any one of claims 9 to 19.

39. Third computer program product, **characterised in, that** said third computer program product comprises third computer program code, which, when executed by a computer, enables said computer to act as a verification provider according to any one of claims 17 to 19.

40. Fourth computer program product, **characterised in, that** said fourth computer program product comprises fourth computer program code, which, when executed by a computer, enables said computer to act as a verification provider according to claim 26 or 27.

41. Computer readable medium **characterised in, that** said computer readable medium is carrying computer program code according to any one of claims 37, 38, 39 or 40.

## Amended claims

### Amended claims in accordance with Rule 86(2) EPC.

**1.** Method for monitoring and saving data records in a monitored system (100) with the purpose of preventing the possibility to tamper with said data records at a later time, **characterised in**, saving data content together with a time-limited active key (302), meaning a key representing a time interval only known by the provider of the key, generating a lock value representing all former data records (305), saving the lock value together with said data content and said time-limited active key (308), and encrypting said data content, active key and lock value using an encryption algorithm not possible for the encryptor to decrypt (309), said encrypted data content, active key and lock value forming said data record.

**2.** Method according to claim 1, **characterised in, that** said lock value is a hash of the data content of the former data record.

**3.** Method according to claim 1, **characterised in, that** said lock value is a hash of the former data record.

**4.** Method according to claim 1, **characterised in, that** said lock value is a hash of the data content of at least two of the former data records.

**5.** Method according to claim 1, **characterised in, that** said lock value is a hash of at least two of the former data records.

**6.** Method according to claim 1, **characterised in, that** said lock value is the data content of the former data record.

**7.** Method according to any preceding claims, **characterised in, that**, if said data record is a first data record in a set of data records, then said time-limited active key is used as a lock value representing a virtual former data record (306).

**8.** Method according to claim 1 or 7, **characterised in, that** said time limited active key is provided by a trusted synchronization server (107, 220 - 227).

**9.** Method according to claim 8, **characterised in, that** said time limited active key is a representation of a time interval, during which time interval said time limited active key is valid, said time interval being coded so that only said trusted synchronization server (107) can decode and indicate said time interval.

**10.** Method according to claim 8 or 9, **characterised in, that** a UTC time stamp is included in said data record before encryption (303), representing the claimed creation time of said data record.

**11.** Method according to claim 10, **characterised in, that** said UTC time stamp is provided by said trusted synchronization server (222).

**12.** Method according to claims 8 to 11, **characterised in, that** a synchronization slave module (105), belonging to said monitored system (100), handles said time-limited active keys, that the set-up of said synchronization slave module (105) in said monitored system (100) comprises the steps of:
- registering said synchronization slave module at said trusted synchronization server (107, 210),
- creating a unique ID number that later will be used when installing said synchronisation slave module (105, 211),
- creating a unique pattern of active keys for said synchronization slave module (212), and
- saving the pattern of active keys in a pattern storage database (108) belonging to said trusted synchronization server (107) together with the synchronization slave module ID (213),
where said creation of said unique ID and unique pattern of active keys are performed by said trusted synchronization server (107).

**13.** Method according to claim 12, **characterised in, that** said pattern of active keys consists of a combination of random keys, and that the time intervals represented by respective key may all be the same or differ between keys.

**14.** Method according to claim 12 or 13, **characterised in, that** said pattern of keys are created so it contains a sufficient amount of keys for a long period of time, such as 10 years, from the creation day.

**15.** Method according to claim 12, 13 or 14, **characterised in, that** a synchronisation between said synchronization slave module (105) and a synchronization master module (109) belonging to said synchronization server (107) comprises the steps of:
- said synchronization slave module (105) sending or receiving a request to connect to said synchronization master module (109), said request being triggered when the current active key of said synchronization slave module is invalid or soon invalid and said monitored system (100) needs a new active key (220).
- establishing a communication session between said synchronization slave module (105) to said synchronization master module (109), making it possible to communicate in a safe way, such as a HTTPS session (221),
- said synchronization master module (109) optionally sending a current UTC time stamp to said synchronization slave module (105, 222),
- said synchronization master module (109) retrieving the synchronization slave module ID from said synchronization slave module (105. 223).
- said synchronization master module (109) looking up the next active key from said pattern storage database (108) using the current UTC time and said ID (224),
- said synchronization master module (109) creating a new active key and saving it in said pattern storage database (108) using the current UTC time and said ID if no active key was found in the previous step,
- said synchronization master module (109) sending said active key to said synchronization slave module (105) together with information on how long the key will be active (225), and
- disconnecting said session (226).

**16.** Method according to any preceding claim, **characterised in, that** a verification of a data record or records comprises the steps of:
a) said monitored system (100) sending all or a part of the data records to a verification provider (VP, 401),
b) said verification provider (VP) decrypting said data records using a secret private key only known by said verification provider (402),
c) said verification provider (VP) retrieving all active keys from the data records,
d) said verification provider (VP) retrieving all active keys stored in the pattern database for said monitored system,
e) said verification provider (VP) comparing all active keys from the pattern database with the active keys stored in the data records (406),
f) said verification provider (VP) giving a negative verification if any active key for a specific claimed creation time in the data file does not match the active key for the same time from the pattern database (407, 408), and
g) said verification provider (VP) giving a positive verification if the keys match (407, 409).

**17.** Method according to claim 16, **characterised in, that,** if a lock value is used and included in said data record, then a verification of a data record or data records comprises the following steps after step b:
b1) said verification provider (VP) running the data records through the same algorithm that was used by the monitored system (100) to generate said lock values,
b2) said verification provider (VP) checking that the new generated lock values are the same as the lock values stored in the data records (403),
b3) said verification provider (VP) giving a negative verification if the lock values does not match (404, 405), and
b4) said verification provider (VP) continuing with step c) if the lock values match (404, 406).

**18.** Method according to claim 16 or 17, **characterised in, that** the same server has the role of said synchronization master module (109) and said verification provider (VP).

**19.** Method according to any preceding claim, **characterised in, that** said monitored system (100) is running on a trusted computing platform.

**20.** Method according to any one of claims 1 to 7, **characterised in, that** said monitored system (100') is running on a trusted computing platform, and that said time limited active key is provided by said trusted computing platform.

**21.** Method according to claim 20, **characterised in, that** said time limited active key is a representation of a time interval, during which time interval said time limited active key is valid, that said active key is generated by a trusted internal clock belonging to said trusted computing platform.

**22.** Method according to claim 20, **characterised in, that** said time limited active key is a UTC time stamp representing the time of encryption, said active key being protected in the trusted part of said trusted computing platform.

**23.** Method according to claim 22, **characterised in, that** said UTC time stamp is provided by an internal trusted clock, belonging to said trusted computing platform.

**24.** Method according to claim 21 or 23, **characterised in, that** said internal trusted clock is synchronized with an external trusted time source.

**25.** Method according to any one of claims 20 to 24, **characterised in, that** a verification of a data record or records comprises the steps of:
a) said monitored system sending all or a part of the data records to a verification provider,
b) said verification provider decrypting said data records using a secret private key only known by said verification provider, and
c) said verification provider giving a positive verification if the active key stored in the data records matches the claimed creation time.

**26.** Method according to claim 25, **characterised in, that,** if a lock value is used and included in said data record, then a verification of a data record or data records comprises the following steps:
b1) said verification provider running the data records through the same algorithm that was used by the monitored system to generate said lock values,
b2) said verification provider checking that the new generated lock values are the same as the lock values stored in the data records,
b3) said verification provider giving a negative verification if the lock values does not match, and
b4) said verification provider continuing with step c) if the lock values match.

**27.** Method according to any preceding claim, **characterised in, that** e-mail messages sent and received by said monitored system constitutes data content in data records.

**28.** Method according to claim 27, **characterised in, that** all e-mail messages sent and received by said monitored system constitutes data content in data records.

**29.** Method according to claim 27, **characterised in**, predefined rules defining what e-mail messages that are to constitute data content in data records.

**30.** Method according to claim 27 or 29, **characterised in, that** a user of said monitored system actively selects e-mail messages that are to constitute data content in data records.

**31.** Method according to any one of claims 1 to 26, **characterised in, that** all network traffic to and from said monitored system constitutes data content in data records.

**32.** Method according to any preceding claim, **characterised in, that** electronic documents stored by said monitored system constitutes data content in data records.

**33.** Method according to claim 32, **characterised in**, predefined rules defining what electronic documents that are to constitute data content in data records.

**34.** Method according to claim 32 or 33, **characterised in, that** a user of said monitored system actively selects electronic documents that are to constitute data content in data records.

**35.** Method according to any preceding claim, **characterised in, that** a symmetric encryption module, belonging to said monitored system (100) is performing the steps of:
- creating a random symmetric encryption key (602),
- encrypt said data content using said symmetric encryption key and a symmetric encryption algorithm (603),
- optionally repeating the steps above as many times as desired to create as many symmetric encryption keys as desired, and
- distributing the symmetric encryption keys to trusted parties for storage (604).

**36.** First computer program product (71), **characterised in, that** said first computer program product (71) comprises first computer program code (71a), which, when executed by a computer, enables said computer to act as a monitored system (100) according to any one of claims 1 to 35.

**37.** Second computer program product (72), **characterised in, that** said second computer program product (72) comprises second computer program code (72a), which, when executed by a computer, enables said computer to act as a synchronization server (107) according to any one of claims 8 to 18.

**38.** Third computer program product (73), **characterised in, that** said third computer program product (73) comprises third computer program code (73a), which, when executed by a computer, enables said computer to act as a verification provider (VP, 110) according to any one of claims 16 to 18.

**39.** Fourth computer program product (74), **characterised in, that** said fourth computer program product (74) comprises fourth computer program code (74a), which, when executed by a computer, enables said computer to act as a verification provider (VP, 110') according to claim 25 or 26.

**40.** Computer readable medium (8) **characterised in, that** said computer readable medium (8) is carrying computer program code 71a, 72a, 73a, 74a) according to any one of claims 36, 37, 38 or 39.
